# EUROPÄISCHE PATENTSCHRIFT

(11) **EP 2 383 409 B1**
(45) Veröffentlichungstag und Bekanntmachung des Hinweises auf die Patenterteilung: **04.12.2019**
(21) Anmeldenummer: 11003332.1
(22) Anmeldetag: 20.04.2011
(51) Int. Cl.: E05B 17/22, E05B 9/08, G01D 11/24, E05B 47/00, E05B 45/06

(54) **SCHLIESSVORRICHTUNG MIT EINER ZUSTANDSDETEKTIONSVORRICHTUNG**
CLOSING DEVICE WITH A STATUS DETECTION DEVICE
DISPOSITIF DE FERMETURE AVEC UN DISPOSITIF DE DÉTECTION D'ÉTAT

(30) Priorität: 28.04.2010 DE 102010018566
(43) Veröffentlichungstag der Anmeldung: 02.11.2011
(73) Patentinhaber: SimonsVoss Technologies GmbH, 85774 Unterföhring (DE)
(72) Erfinder: Meyerle, Herbert, 82216 Maisach (DE)
(74) Vertreter: Samson & Partner Patentanwälte mbB

(56) Entgegenhaltungen:
- DE-A1- 10 059 582
- DE-U1- 8 610 105
- DE-U1-202006 015 541
- US-A1- 2008 012 705

## Beschreibung

### Gebiet der Erfindung

Die vorliegende Erfindung betrifft im Allgemeinen Schließvorrichtungen, wie z.B. Schlösser für Türen, Tore, Fenster und dergleichen.

### Hintergrund der Erfindung

Im Folgenden wird auf das nicht einschränkende Beispiel einer Schließvorrichtung für eine Tür Bezug genommen. Alle folgenden Ausführungen gelten aber auch entsprechend für jegliche Schließvorrichtungen für Tore, Fenster, und sonstige Vorrichtungen, mit denen eine Öffnung in einer Gebäudewand oder -struktur verschlossen und freigegeben bzw. geöffnet werden kann.

Oftmals sind Informationen über den aktuellen Zustand von Türen erforderlich, wie beispielsweise darüber, ob eine Tür geschlossen ist oder nicht (d.h. teilweise oder vollständig geöffnet ist) und/oder ob eine Schließvorrichtung einer Tür verriegelt oder unverriegelt bzw. entriegelt ist. Solche Informationen können beispielsweise bei der Überwachung und Sicherung von Gebäuden verwendet werden. Derartige Informationen können ferner verwendet werden, um eine geschlossene Tür gesteuert zu verschließen, indem deren Schließvorrichtung verriegelt wird, und aufzuschließen, indem deren Schließvorrichtung entriegelt wird. Anhand solcher Informationen kann z.B. auch verhindert werden, dass eine Schließvorrichtung verriegelt wird oder werden kann, wenn deren Tür nicht geschlossen ist.

Um den Zustand von Türen zu ermitteln sind sogenannte Schließzustandsmelder bekannt, die Signale bereitstellen, die angeben, ob eine Tür geschlossen ist. Hierfür wird z.B. ein im oder am Türrahmen oder -stock angeordneter mechanischer Signalgeber (z.B. ein Schalter) verwendet, der von der Falle oder dem Riegel eines Türschlosses betätigt wird, wenn die Tür geschlossen wird bzw. wenn bei geschlossener Tür das Türschloss verriegelt wird. Im Fall einer Betätigung des Signalgebers durch den Riegel kann aus einem Signal des Schließzustandsmelders auch darauf geschlossen werden, dass das Türschloss verriegelt ist. Nachteile derartiger bekannter Ansätze umfassen beispielsweise, den zur Justage des Schließzustandsmelders erforderlichen Aufwand, die Verwendung einer separaten Komponente, nämlich des Schließzustandsmelders, und dessen im Allgemeinen aufwändige Anordnung im oder am Türrahmen oder -stock.

Die Druckschrift DE 20 2006 015 541 U1 beschreibt eine Einbauhalterung in Form einer Hohlschraube für einen zylindrischen Sensor, insbesondere einen Magnetkontaktschalter. Die Hohlschraube wird mit einem Lamellenstopfen in einen Fenster- oder Türrahmen eingebaut und wirkt mit einem am Tür- bzw. Fensterflügel angebrachten Auslösemagneten zusammen. Der Magnetkontaktschalter ist mit einem Anschlusskabel fest verbunden und wird in eine Öffnung des Rahmens eingesetzt. Das zylindrische Gehäuse 3 des Sensors ist dabei um seine Längsachse drehbeweglich im zylindrischen Innenraum einer Hohlschraube angeordnet.

Die Druckschrift US 2008/0012705 A1 beschreibt einen Türpositionsüberwachungsmechanismus, der am Rand einer Tür montiert ist und erfasst, ob eine Tür geöffnet oder geschlossen ist, indem er das Fehlen oder Vorhandensein eines Magnetfeldes eines Magneten erfasst, der im Türrahmen montiert ist. Informationen über die Türposition werden dann an ein batteriebetriebenes drahtloses Zugangskontrollsystem, das an der gleichen Tür montiert ist, durch Kabel übertragen.

### Aufgabe der Erfindung

Aufgabe der vorliegenden Erfindung ist es, Nachteile bekannter Ansätze zum Ermitteln, ob eine Tür geschlossen ist, zu überwinden, und insbesondere Lösungen bereitzustellen, die im Wesentlichen vollständig in eine Schließvorrichtung integrierbar sind.

### Kurze Beschreibung der Erfindung

Zur Lösung dieser Aufgabe stellt die vorliegende Erfindung eine Schließvorrichtung mit einer Zustandsdetektionsvorrichtung gemäß dem unabhängigen Anspruch bereit. Bevorzugte Ausführungsformen sind in den abhängigen Ansprüchen angegeben.

Die Zustandsdetektionsvorrichtung ist zur Verwendung für eine Schließvorrichtung (wie z.B. ein Schloss für eine Tür, ein Tor und dergleichen) vorgesehen. Die Zustandsdetektionsvorrichtung ist insbesondere für eine in einer Schließvorrichtung vorgesehene Aufnahme (oder Bauraum) ausgeführt, die zur Aufnahme eines Befestigungsmittels für einen Schließzylinder dient.

Eine solche Aufnahme kann beispielsweise die Aufnahme (oftmals als Bohrung ausgeführt) für eine Stulpschraube, einen Stift, Bolzen, etc. sein, mit der bzw. dem ein Schließzylinder in einem Schloss befestigt werden kann. Erfindungsgemäß ist die Zustandsdetektionsvorrichtung, wie weiter unten näher erläutert, selbst als solches Befestigungsmittel ausgestaltet (z.B. in Form einer Stulpschraube) und erfüllt auch dessen Funktion (Befestigung eines Schließzylinders). Die Zustandsdetektionsvorrichtung ist so ausgebildet, dass sie in die Aufnahme (Bauraum) für ein Befestigungsmittel passt und folglich dort angeordnet werden kann. Dabei ist es nicht erforderlich, dass die Zustandsdetektionsvorrichtung die Funktion eines Befestigungsmittels erfüllt, sondern nur den für ein solches bereitgestellten Bauraum nutzt.

Die erfindungsgemäße Vorgehensweise umfasst insbesondere, vorhandene "Infrastruktur" (z.B. in Form einer vorhandenen Schließvorrichtung, Schlosses oder Schließzylinders) im Wesentlichen unverändert zu nutzen und eine oder mehrere in Verbindung mit der vorhandenen Infrastruktur verwendete oder von dieser üblicherweise umfasste Standardkomponente durch eine erfindungsgemäße Zustandsdetektionsvorrichtung zu ersetzen und/oder vorhandenen Bauraum, Strukturen etc. zur Anordnung einer erfindungsgemäßen Zustandsdetektionsvorrichtung zu nutzen. Die erfindungsgemäße Zustandsdetektionsvorrichtung ist als Befestigungsmittel ausgeführt und wird anstelle eines herkömmlichen Befestigungsmittels verwendet, und zwar auf die gleiche Art und Weise. Zur Veranschaulichung sei auf eine weiter unten näher beschriebene Ausführungsform verwiesen, bei der die Zustandsdetektionsvorrichtung als Stulpschraube ausgebildet ist. "Äußerlich" unterscheidet sich die erfindungsgemäße Stulpschraube nicht von einer herkömmlichen und kann wie diese verwendet werden, ohne dass sonstige Modifikationen z.B. eines zu befestigenden Schließzylinders oder eines Schlosses, für das die erfindungsgemäße Stulpschraube vorgesehen ist, erforderlich sind. Dies kann auch eine erfindungsgemäße Zustandsdetektionsvorrichtung sein, die in eine Aufnahme für eine Stulpschraube eingebracht werden kann, wobei z.B. ein in der Aufnahme vorgesehenes Gewinde mit einem an der erfindungsgemäßen Zustandsdetektionsvorrichtung angeordneten Gewinde zusammenwirken kann. Auch hierbei wird die vorhandene Infrastruktur (im Speziellen der vorhandene Bauraum) genutzt, allerdings ohne dabei die Funktion einer ansonsten verwendeten Standardkomponente (Stulpschraube) bereitzustellen, weil diese z.B. für bestimmte Varianten und/oder Anwendungen nicht erforderlich ist. Da der Bauraum vorhanden ist, kann er für die Zustandsdetektionsvorrichtung verwendet werden. Dieser grundsätzliche Ansatz wird vorzugsweise bei allen Ausführungsformen verwendet, auch wenn dies im Folgenden nicht immer explizit angegeben ist.

Die Zustandsdetektionsvorrichtung weist darin angeordnet eine Öffnungszustandsdetektionseinrichtung auf, die vorgesehen ist, um zu detektieren, ob die Tür, das Tor und dergleichen geschlossen ist (oder nicht).

Die Öffnungszustandsdetektionseinrichtung kann eine Sensoreinrichtung zur Detektion des geschlossen Zustands der Tür, des Tors und desgleichen umfassen.

Die Sensoreinrichtung kann wenigstens eine Sensoreinheit umfassen.

Vorzugsweise umfasst jede Sensoreinheit wenigstens eine der folgenden Komponenten: ein Hallsensor, ein optischer Sensor, ein induktiver Sensor, ein kapazitiver Sensor ein Drucksensor, ein Reed-Relais.

Im Fall von Hallsensoren kann der geschlossene Zustand der Tür, des Tors und desgleichen detektiert werden, wenn im geschlossenen Zustand der Tür, des Tors und desgleichen ein Magnetfeld in Wechselwirkung mit dem Hallsensor tritt. Ein solches Magnetfeld kann beispielsweise durch einen am oder im Tür-, Tor- oder Fensterrahmen oder -stock, Schließblech, etc. angeordneten Magneten oder steuerbar magnetisierbares Element (z.B. eine Spule) bereitgestellt werden.

Vorzugsweise kann zur Detektion des geschlossenen Zustands ein weiter unten beschriebenes sogenanntes detektierbares Element verwendet werden.

Im Fall von optischen Sensoren kann der geschlossene Zustand der Tür, des Tors und desgleichen beispielsweise detektiert werden, wenn im geschlossenen Zustand der Tür, des Tors und desgleichen der optische Sensor beispielsweise durch Erfassung reflektierten Lichts und/oder Helligkeits- und/oder Farberfassung erkennt, dass ein (nur) im geschlossenen Zustand der Tür, des Tors und desgleichen im "Blickfeld" des optischen Sensors befindliches Element (insbesondere ein sogenanntes detektierbares Element) vom Sensor erfasst wird.

Im Fall von induktiven Sensoren kann der geschlossene Zustand der Tür, des Tors und desgleichen beispielsweise detektiert werden, wenn im geschlossenen Zustand der Tür, des Tors und desgleichen in z.B. durch eine stromführende Leitung in oder an einer die Tür, das Tor und dergleichen begrenzenden Struktur erzeugtes elektromagnetisches Feld in Wechselwirkung mit dem induktiven Sensor tritt. Vorzugsweise kann ein sogenanntes detektierbares Element zur Detektion durch den Sensor vorgesehen sein.

Im Fall von Drucksensoren kann der geschlossene Zustand der Tür, des Tors und desgleichen beispielsweise detektiert werden, wenn im geschlossenen Zustand der Tür, des Tors und desgleichen eine die Tür, das Tor und dergleichen begrenzenden Struktur oder ein daran angeordnetes vorzugsweise vorstehendes Element oder eine andere mechanische oder durch Kontakt detektierbare Kodierung (z.B. ein sogenanntes detektierbares Element) den Drucksensor kontaktiert bzw. bestätigt.

Die Sensoreinrichtung kann an oder benachbart zu einer Seite der Zustandsdetektionsvorrichtung angeordnet sein, die im geschlossenen Zustand der Tür, des Tors und desgleichen zu einer Struktur weist, die die Tür, das Tor und dergleichen begrenzt. Beispielsweise kann die Sensoreinrichtung an einem Ende der Zustandsdetektionsvorrichtung (oder benachbart dazu) angeordnet sein, das im geschlossenen Zustand einer Tür dem Türrahmen oder einem Schließblech gegenüberliegt.

Die Sensoreinrichtung kann eine erste Sensoreinheit umfassen, die zur Detektion des geschlossenen Zustands der Tür, des Tors und desgleichen vorgesehen ist. Insbesondere kann die erste Sensoreinheit so ausgelegt und/oder angeordnet sein, dass sie, wenn die Tür, das Tor und dergleichen geschlossen ist, diesen Zustand detektieren kann.

Ferner kann die Sensoreinrichtung eine zweite Sensoreinheit umfassen, die zur Detektion des geschlossenen Zustands der Tür, des Tors und desgleichen ausgelegt ist. Dabei ist vorgesehen, dass die zweite Sensoreinheit zwar detektieren kann, dass die Tür, das Tor und dergleichen geschlossen ist, also grundsätzlich dazu technisch in der Lage ist.

Allerdings ist es möglich, dass die zweite Sensoreinheit, auch wenn sie den geschlossenen Zustand der Tür, des Tors und desgleichen detektieren könnte (z.B. weil sie technisch dazu in der Lage ist), dies nicht tun kann, weil sie so angeordnet ist, dass sie keine Information über den Zustand der Tür, des Tors und desgleichen erhalten kann. Mit anderen Worten, die zweite Sensoreinheit kann so angeordnet sein, dass sie den geschlossen Zustand der Tür, des Tors und desgleichen nicht zu detektieren vermag.

Um dies zu erreichen, kann die zweite Sensoreinheit beispielsweise in der Zustandsdetektionsvorrichtung weiter von einer Außenseite der Zustandsdetektionsvorrichtung beabstandet als die erste Sensoreinheit von dieser Außenseite angeordnet sein. Dadurch kann z.B. eine Anordnung geschaffen werden, bei der die erste Sensoreinheit den (geschlossenen) Zustand der Tür, des Tors und desgleichen erfassen (z.B. messen) kann, während die zweite Sensoreinheit dies anordnungsbedingt nicht kann.

Im Fall von Hallsensoren kann die zweite Sensoreinheit beispielsweise so in der Zustandsdetektionsvorrichtung angeordnet sein, dass ein im geschlossenen Zustand der Tür, des Tors und desgleichen in Wechselwirkung mit der ersten Sensoreinheit tretendes Magnetfeld nicht in Wechselwirkung mit der zweiten Sensoreinheit tritt. Dadurch kann z.B. festgestellt werden, dass ein anderes Magnetfeld verwendet wird, um die Öffnungszustandsdetektionseinrichtung zu manipulieren, indem zum Beispiel ein Elektro- oder Dauermagnet in die Nähe der Zustandsdetektionsvorrichtung gebracht wird, um einen geschlossenen Zustand der Tür, des Tors und desgleichen vorzutäuschen, oder aus Versehen ein Magnetfeld eines tragbaren Geräts auf die Sensoreinheiten wirkt.

Im Fall von induktiven Sensoren kann die zweite Sensoreinheit beispielsweise so in der Zustandsdetektionsvorrichtung angeordnet sein, dass ein im geschlossenen Zustand der Tür, des Tors und desgleichen in Wechselwirkung mit der ersten Sensoreinheit tretendes elektromagnetisches Feld nicht in Wechselwirkung mit der zweiten Sensoreinheit tritt. Dadurch kann z.B. festgestellt werden, dass ein anderes elektromagnetisches Feld verwendet wird, um die Öffnungszustandsdetektionseinrichtung zu manipulieren, indem zum Beispiel ein Stromleiter in die Nähe der Zustandsdetektionsvorrichtung gebracht wird, um einen geschlossenen Zustand der Tür, des Tors und desgleichen vorzutäuschen, oder aus Versehen ein elektromagnetisches Feld eines tragbaren Geräts auf die Sensoreinheiten wirkt.

Im Fall von Drucksensoren kann die zweite Sensoreinheit beispielsweise so in der Zustandsdetektionsvorrichtung angeordnet sein, dass eine im geschlossenen Zustand der Tür, des Tors und desgleichen die Tür, das Tor und dergleichen begrenzenden Struktur oder ein daran angeordnetes vorzugsweise vorstehendes Element die erste Sensoreinheit kontaktiert, während dies bei der zweiten Sensoreinheit nicht der Fall ist.

Vorzugsweise sind bei solchen Ausführungen die ersten und zweiten Sensoreinheiten vom gleichen Typ sind, z.B. jeweils Hallsensoren, optische Sensoren, induktive Sensoren, Drucksensoren etc.

Allerdings ist es auch möglich, dass die zweite Sensoreinheit ebenfalls zur Detektion des geschlossenen Zustands der Tür, des Tors und desgleichen angeordnet ist. Derartige Varianten können eine zuverlässigere Detektion des geschlossenen Zustands der Tür, des Tors und desgleichen ermöglichen, wenn beispielsweise der geschlossene Zustand der Tür, des Tors und desgleichen nur dann angegeben wird, wenn die erste und die zweite Sensoreinheit den geschlossenen Zustand detektieren oder detektiert haben, oder angegeben wird, wenn wenigstens eine der ersten und zweiten Sensoreinheit den geschlossenen Zustand detektiert oder detektiert hat.

Bei solchen können die ersten und zweiten Sensoreinheiten gleichen oder unterschiedlichen Typs sein. Im letzteren Fall kann dies für eine zuverlässigere Detektion des geschlossenen Zustands der Tür, des Tors und desgleichen sorgen. Wenn beispielsweise eine Sensoreinheit eines Typs fehlerhaft arbeitet, kann die andere Sensoreinheit zur Detektion des geschlossenen Zustands herangezogen werden.

Vorzugsweise ist die Zustandsdetektionsvorrichtung ausgelegt, Information an die Schließvorrichtung oder eine darin angeordnete Komponente abzugeben und/oder von der Schließvorrichtung oder einer darin angeordneten Komponente Energie zu erhalten. Hier kann die Zustandsdetektionsvorrichtung eine oder mehrere Schnittstellen, Anschlüsse, Kontakte und/oder dergleichen aufweisen, die unidirektional Information abzugeben und Energie zu erhalten vermögen oder die bidirektional zur Informationsabgabe und Energieaufnahme ausgelegt sind. Diese werden im Folgenden auch als Information abgebende Einrichtung bzw. Energie aufnehmende Einrichtung bezeichnet.

Es ist zum Beispiel vorgesehen, dass, um die Zustandsdetektionsvorrichtung und insbesondere um die Öffnungszustandsdetektionseinrichtung bzw. deren Komponenten mit Energie zu versorgen und/oder Steuersignale, -daten und dergleichen zu der Öffnungszustandsdetektionseinrichtung bzw. deren Komponenten zu übertragen und/oder Signale, Daten und dergleichen von der Öffnungszustandsdetektionseinrichtung bzw. deren Komponenten zu erhalten, die Zustandsdetektionsvorrichtung entsprechende elektrische leitende Komponenten aufweist. Beispielsweise können an einer Außenseite der Zustandsdetektionsvorrichtung ein erster Leiter angeordnet und/oder von der Außenseite der Zustandsdetektionsvorrichtung bereitgestellt sein und im Innern der Zustandsdetektionsvorrichtung ein zweiter Leiter angeordnet sein.

Auch ist wieder der Ansatz bevorzugt, die Zustandsdetektionsvorrichtung so auszugestalten, dass sie im Wesentlichen ohne oder nur mit geringer Modifikation der "Infrastruktur", für die es vorgesehen ist, verwendet werden kann. Die Zu- und Ableitungen der Zustandsdetektionsvorrichtung sind vorzugsweise so ausgestaltet, dass diese auf einfache Weise angeschlossen bzw. verbunden werden kann. Insbesondere ist es bevorzugt, dass die Zu- und Ableitungen der Zustandsdetektionsvorrichtung ohne weitere Maßnahmen angeschlossen bzw. verbunden sind, wenn sich die Zustandsdetektionsvorrichtung an der vorgesehenen Position in der Schließvorrichtung befindet. Im Fall einer Zustandsdetektionsvorrichtung in Form einer Stulpschraube wäre dies beispielsweise der Fall, wenn die Zustandsdetektionsvorrichtung in die entsprechende Aufnahme zur Befestigung in einem Schloss eingebracht ist. Dabei kann die Zustandsdetektionsvorrichtung einen Schließzylinder, so vorhanden, dort sichern, befestigen. Da Schließvorrichtungen und insbesondere deren Beschläge oftmals bestimmte Vorgaben erfüllen (z.B. gesetzliche, Norm-/Standardvorgaben), gibt es im Allgemeinen Bauraum, der bei Schließvorrichtungen eines Typs regelmäßig vorhanden ist. Erneut wird auf das Beispiel der Aufnahme für eine Stulpschraube verwiesen, die auch bei nicht erfindungsgemäßen Schließvorrichtungen (insbesondere in den Beschlägen) vorhanden sein kann, wenn kein Schließzylinder verwendet wird. Dies ist z.B. bei Schließvorrichtungen der Fall, wo die Falle und/oder der Riegel mittels einer elektronischen/mechanischen Einrichtung betätigt werden können. Die dennoch vorhandene Stulpschraubenaufnahme kann zur Anordnung der Zustandsdetektionsvorrichtung in der Schließvorrichtung verwendet werden. Dabei kann die Zustandsdetektionsvorrichtung durchaus in Form einer Stulpschraube ausgebildet sein und in die nicht erfindungsgemäße Schließvorrichtung eingeschraubt werden, wo sie aber keinen Schließzylinder, weil nicht vorgesehen, sichert.

Vorzugsweise erstreckt sich ein Teil des zweiten Leiters aus der Zustandsdetektionsvorrichtung heraus, was die Herstellung einer elektrisch leitenden Verbindung mit diesem unterstützen kann.

Die Öffnungszustandsdetektionseinrichtung kann in einem Innenraum der Zustandsdetektionsvorrichtung angeordnet sein, wobei der Innenraum vorzugsweise mittels eines Verschlusses verschließbar ist. Letzteres erlaubt es z.B. die Öffnungszustandsdetektionseinrichtung (nachträglich) einzubauen und auszutauschen bzw. zu prüfen oder warten.

Der Verschluss kann an oder benachbart zu einer Seite der Zustandsdetektionsvorrichtung angeordnet sein, die im geschlossenen Zustand der Tür, des Tors und desgleichen zu einer Struktur weist, die die Tür, das Tor und dergleichen begrenzt.

Die Zustandsdetektionsvorrichtung kann als Stulpschraube für einen Schließzylinder eines Türschlosses ausgeführt sein, wobei die Öffnungszustandsdetektionseinrichtung in der Stulpschraube angeordnet ist und zur Detektion eines geschlossenen Zustands der Tür vorgesehen ist. Solche Ausführungen der Zustandsdetektionsvorrichtung können bei Schließvorrichtungen mit Schließzylinder und bei nicht erfindungsgemäßen Schließvorrichtungen ohne Schließzylinder verwendet werden. Im ersten Fall stellt die Zustandsdetektionsvorrichtung nicht nur die Funktionen der Öffnungszustandsdetektionseinrichtung bereit, sondern erfüllt auch die einer herkömmlichen Stulpschraube. Im zweiten nicht erfindungsgemäßen Fall stellt die Zustandsdetektionsvorrichtung die Funktionen der Öffnungszustandsdetektionsvorrichtung bereit, dient aber nicht zur Sicherung eines Schließzylinders, sondern nutzt "nur" den vorhandenen Bauraum für eine Stulpschraube.

Im nicht erfindungsgemäßen Fall ohne Schließzylinder kann in dem für einen Schließzylinder vorgesehenen Bauraum eine Einrichtung angeordnet werden, die Daten, Signale, Informationen von der Zustandsdetektionsvorrichtung (insbesondere Angaben über den Öffnungszustand der Tür, des Tors, etc.) z.B. an eine Steuerung einer Schließanlage oder -systems für die Verriegelungsvorrichtung erhält und solches verarbeiten und/oder weiterleiten vermag und/oder die die Zustandsdetektionsvorrichtung mit Energie versorgen kann. Eine solche Einrichtung kann z.B. die äußerliche Form eines Schließzylinders gegebenenfalls ohne Schließbart haben. Die Sicherung einer solchen Einrichtung in der Schließvorrichtung kann mittels der Zustandsdetektionsvorrichtung erfolgen, wenn diese als entsprechendes Befestigungsmittel ausgebildet ist, und/oder durch andere Maßnahmen (z.B. Kleben, Kraftschluss, etc.) erreicht werden.

Die Sensoreinrichtung kann an, in oder benachbart zu dem Schraubenkopf der Stulpschraube angeordnet sein. Dies kann insofern bevorzugt sein, als der Schraubenkopf der Stulpschraube bei geschlossener Tür im Allgemeinen einen geringen Abstand zu dem Türrahmen oder einem Schließblech und damit auch die Sensoreinrichtung haben, die beispielsweise durch magnetische, optische, induktive oder mechanische Wechselwirkung ausgehend von einem Türrahmen oder Schließblech den geschlossenen Zustand der Tür zu ermitteln vermag.

Insbesondere im Fall von zwei Sensoreinheiten, von denen eine nicht zur Detektion des geschlossenen Zustands der Tür angeordnet ist, kann eine Sensoreinheit weiter entfernt von dem Schraubenkopf der Stulpschraube als die andere Sensoreinheit angeordnet sein.

Zur Energieversorgung und Signal-, Datenübertragung können an einer Außenseite der Stulpschraube ein erster Leiter und im Innern der Stulpschraube ein zweiter Leiter angeordnet sein.

Bei einigen Ausführungsformen kann sich ein Teil des zweiten Leiters aus der Stulpschraube herauserstrecken, vorzugsweise an dem dem Schraubenkopf gegenüberliegenden Ende der Stulpschraube.

Bei Verwendung eines Verschlusses für einen in der Stulpschraube ausgebildeten Innenraum zur Aufnahme der Öffnungszustandsdetektionseinrichtung kann der Verschluss am oder im Schraubenkopf der Stulpschraube angeordnet sein.

Die Zustandsdetektionsvorrichtung kann so ausgeführt sein, dass sie in einer in der Schließvorrichtung vorhandenen Aufnahme für eine Stulpschraube wenigstens teilweise angeordnet werden kann. Hierbei kann die Zustandsdetektionsvorrichtung z.B. zylinder-/stiftförmig ausgeführt sein, so dass sie in die Stulpschraubenaufnahme passt, wo sie beispielsweise verklebt, verlötet, verklemmt, verrastet, verschraubt, etc. wird. Mittel zur Sicherung/Befestigung der Zustandsdetektionsvorrichtung in der Stulpschraubenaufnahme können an der Zustandsdetektionsvorrichtung vorgesehen sein (z.B. Rasten, Nasen, Klemmstruktur, Gewinde) und/oder als separate Mittel bereitgestellt werden.

Die obigen Ausführungen zur Anordnung von Sensoreinrichtungen, Sensoreinheiten, Leitern und Verschluss bei einer als Stulpschraube ausgeführten Zustandsdetektionsvorrichtung gelten hier entsprechend.

Bei einer weiteren Ausführungsform einer erfindungsgemäßen Zustandsdetektionsvorrichtung für eine Schließvorrichtung für eine Tür, ein Tor und dergleichen, umfasst die Zustandsdetektionsvorrichtung eine Information abgebende und/oder eine Energie empfangende Einrichtung und eine Öffnungszustandsdetektionseinrichtung zur Detektion eines geschlossenen Zustands der Tür, des Tors und desgleichen, wobei die Information und/oder Energie übertragende Einrichtung ausgeführt ist, um Information der Öffnungszustandsdetektionseinrichtung zu der Schließvorrichtung zu übertragen bzw. Energie von der Schließvorrichtung zu erhalten und zur Anordnung in einer in der Schließvorrichtung angeordneten Aufnahme eines Befestigungsmittels für einen Schließzylinder ausgeführt ist, und wobei die Öffnungszustandsdetektionseinrichtung zur Anordnung auf dem Schlossstulp ausgelegt ist.

Auch bei dieser Ausführungsform wird vorhandene Infrastruktur und dort vorhandener Bauraum genutzt, und zwar die Aufnahme für das Schließzylinderbefestigungsmittel für die Information und/oder Energie übertragende Einrichtung und der Bauraum, der üblicherweise (auch) bei geschlossener Tür zwischen dem Schlossstulp und der Türzarge vorhanden ist, für die Öffnungsdetektionseinrichtung. Abgesehen von diesem Unterschied und den im Folgenden genannten gelten die obigen Ausführungen zu Ausführungsformen, bei denen die Zustandsdetektionsvorrichtung im Wesentlichen ganz zur Anordnung in der Aufnahme für ein Schließzylinderbefestigungsmittel angelegt ist, auch für diese Ausführungsformen, bei denen Bauraum zwischen Schlossstulp und Türzarge genutzt wird.

Vorzugsweise ist die Information und/oder Energie übertragende Einrichtung als Stulpschraube ausgeführt. Die Öffnungszustandsdetektionseinrichtung kann als plättchen- oder scheibenartiges Element ausgeführt sein. Zur Befestigung kann die Öffnungszustandsdetektionseinrichtung einen Durchgang, Loch, Bohrung und dergleichen aufweisen, wo hindurch die Information und/oder Energie übertragende Einrichtung in die Aufnahme für das Schließzylinderbefestigungsmittel eingebracht werden kann und so die Öffnungszustandsdetektionseinrichtung am Schlossstulp z.B. mittels einem Absatz oder Knopf (z.B. bei Ausführung als Stulpschraube) sichert. Ergänzend oder alternativ kann die Öffnungszustandsdetektionseinrichtung angeklebt, angeschweißt etc. werden.

Vorzugsweise kontaktieren sich die Öffnungszustandsdetektionseinrichtung und die Information und/oder Energie übertragende Einrichtung (z.B. im Bereich eines Durchgangs durch die Öffnungszustandsdetektionseinrichtung und eines Knopfs der Information und/oder Energie übertragenden Einrichtung) und weisen im Kontaktbereich einen oder mehrere Kontakte zur Übertragung von Information und/oder Energie auf.

Die Öffnungszustandsdetektionseinrichtung kann die oben beschriebene Sensoreinrichtung bzw. deren Sensoreinheit(en) aufweisen, vorzugsweise in die Öffnungszustandsdetektionseinrichtung integriert (z.B. in Ausnehmungen eingesetzt und/oder ins Material der Öffnungszustandsdetektionseinrichtung eingebettet oder eingegossen) und/oder von einer Hülle, Gehäuse oder Mantel der Öffnungszustandsdetektionseinrichtung umgeben.

Wie bereits angedeutet, kann die Schließvorrichtung wenigstens ein detektierbares Element umfassen, das zur Anordnung an einer die Tür, das Tor und dergleichen begrenzenden Struktur vorgesehen ist.

Insbesondere kann wenigstens ein detektierbares Element bereitgestellt sein, das jeweils zur Anordnung an einer die Tür, das Tor und dergleichen begrenzenden Struktur, wie z.B. eine Tür- oder Fensterzarge, ein Schließblech und dergleichen, vorgesehen ist. Ein detektierbares Element ist insbesondere ein Element, das von der Öffnungszustandsdetektionseinrichtung detektiert werden kann. Wird das detektierbare Element von der Öffnungszustandsdetektionseinrichtung erkannt, kann daran auf den geschlossenen Zustand der Tür, des Tors und desgleichen geschlossen werden.

Die Verwendung eines detektierbaren Elements ermöglicht es ebenfalls, vorhandene "Infrastruktur" zu nutzen, hier z.B. wenn die Schließvorrichtung einen herkömmlichen Schließmechanismus umfasst, die ohne Modifikation mit dem detektierbaren Element verwendet werden kann. Dies gilt auch für Ausführungsformen mit zwei oder mehr detektierbaren Elementen.

Das oder die detektierbaren Elemente können wenigstens teilweise magnetisch oder gesteuert magnetisierbar sein, wenigstens teilweise eine optisch detektierbare Kodierung, Element etc. aufweisen, wenigstens teilweise elektrisch leitend sein und/oder ein elektromagnetisches Feld bereitstellen, wenigstens teilweise eine durch mechanischen Kontakt detektierbare Kodierung, Elemente etc. (z.B. ein vorstehender Stift, Nase, Reste) aufweisen. Vorzugsweise sind das oder die detektierbaren Elemente abhängig von der jeweiligen Sensoreinheit der Öffnungszustandsdetektionseinrichtung ausgeführt.

Die Schließvorrichtung umfasst vorzugsweise eine Aufnahme für das Befestigungselement, wobei die Aufnahme wenigstens einen elektrischen Kontakt oder Kontaktbereich für das Befestigungselement aufweist. Dieser Kontakt oder Kontaktbereich kann beispielsweise dazu dienen, mit einem außen am Befestigungsmittel vorgesehenen Leiter eine Verbindung herzustellen.

Die Schließvorrichtung kann einen bewegbaren Kontakt zur weiteren elektrischen Verbindung mit dem Befestigungsmittel aufweisen. Der bewegbare Kontakt kann beispielsweise zur Verbindung mit einem sich aus dem Befestigungselement herauserstreckenden Teil eines (z.B. innen im Befestigungselement angeordneten) Leiters vorgesehen sein.

Erfindungsgemäß umfasst die Schließvorrichtung einen Schließzylinder für ein Einsteckschloss für Türen. Bei solchen Ausführungsformen kann die Zustandsdetektionsvorrichtung als Stulpschraube zur Befestigung des Schließzylinders am Einsteckschloss ausgebildet sein.

Bei weiteren nicht erfindungsgemäßen Ausführungsformen umfasst die Schließvorrichtung eine Einrichtung, die in einer Aufnahme (Bauraum) der Schließvorrichtung angeordnet ist, die z.B. für eine Schließmechanik, Einsteck- oder Zylinderschloss vorgesehen ist. Bei solchen nicht erfindungsgemäßen Ausführungsformen ist es vorgesehen anstelle einer Schließmechanik oder dergleichen eine Einrichtung in der Schließvorrichtung anzuordnen, die von der erfindungsgemäßen Zustandsdetektionsvorrichtung Information zu erhalten, gegebenenfalls auch verarbeiten und/oder weiterleiten, und die erfindungsgemäße Zustandsdetektionsvorrichtung mit Energie zu versorgen vermag.

### Kurze Beschreibung der Zeichnungen

Im Folgenden wird auf die beigefügten Zeichnungen Bezug genommen, die zeigen:
- **Fig. 1**: eine schematische Darstellung einer Ausführungsform einer Zustandsdetektionsvorrichtung,
- **Fig. 2**: eine schematische Darstellung einer Ausführungsform einer Schließvorrichtung,
- **Fig. 3 und 4**: schematische Darstellungen einer Ausführungsform einer Kontaktierung einer Zustandsdetektionsvorrichtung, und
- **Fig. 5**: schematische Darstellungen einer nicht erfindungsgemäßen Ausführungsform ohne Schließzylinder.

### Beschreibung bevorzugte Ausführungsformen

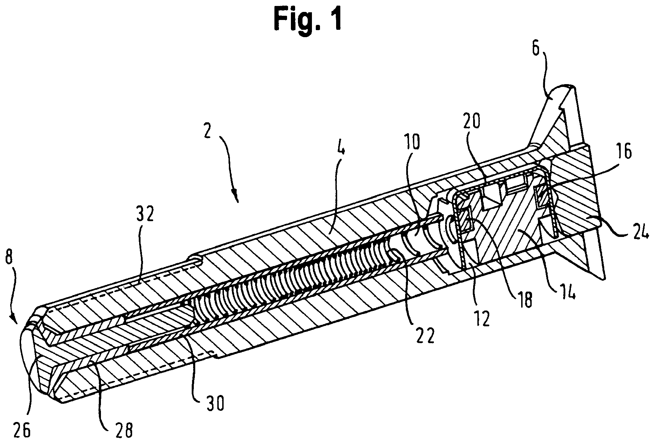

Fig. 1 zeigt eine Ausführungsform einer Zustandsdetektionsvorrichtung 2, hier in Form einer Stulpschraube. Die Stulpschraube 2 weist einen Schraubenkörper 4 und einen Schraubenkopf 6 auf.

Die stulpschraubenförmige Zustandsdetektionsvorrichtung 2 unterscheidet sich also "äußerlich" nicht von einer herkömmlichen Stulpschraube und kann daher wie diese verwendet werden, ohne dass dabei Modifikationen eines Schlosses oder Schließzylinders (d.h. der vorhandenen "Infrastruktur") erforderlich sind.

Durch den Schraubenkörper 4 erstreckt sich ein Innenraum, der einen länglichen, sich ausgehend von dem dem Schraubenkopf 6 gegenüberliegenden Ende 8 erstreckenden Hohlraum 10 und eine sich daran anschließende, sich bis in den Schraubenkopf 6 hineinerstreckende Aufnahme 12 umfasst, in der eine Öffnungszustandsdetektionseinrichtung angeordnet ist.

In der Aufnahme 12 sind an einem Träger 14, als erste und zweite Sensoreinheiten, zwei Hallsensoren 16 und 18 angeordnet. Der Träger 14 dient auch als Abstandshalter zwischen den Hallsensoren 16 und 18. Die Hallsensoren 16 und 18 sind mit einer Platine 20 verbunden, die elektrische Kontakte zur Energie- und Signalübertragung bereitstellt. Die Hallsensoren 16 und 18, die Platine 20 bilden Teile einer Sensoreinrichtung der Öffnungszustandsdetektionseinrichtung, die ferner z.B. den Träger 14 umfasst.

Die Platine 20 wird einerseits von einem elektrischen hier darstellungsgemäß wendelförmig ausgebildeten Leiter 22 und andererseits von einem Verschluss 24 kontaktiert, der die das darstellungsgemäß linke offene Ende der Aufnahme 12 verschließt. Beim Zusammenbau wird durch Einbringen des Verschlusses 24 in das darstellungsgemäß linke offene Ende der Aufnahme 12 die Platine 20 zwischen dem Verschluss 24 und dem darstellungsgemäß rechten Ende des Leiters 22 eingeklemmt. Dies kann durch die in Längsrichtung federelastische Eigenschaft des Leiters 22 unterstützt werden, die er aufgrund seiner hier angenommenen wendelförmigen Ausgestaltung hat. Die auf die Platine 20 wirkenden Kräfte drängen die Hallsensoren 16 und 18 aufeinander zu und gegen den Träger 14.

An seinem darstellungsgemäß linken Ende steht der Leiter 22 mit einem als Außenkontakt dienenden Kontaktelement 26 in Verbindung, das sich ausgehend von Hohlraum 10 aus diesem heraus erstreckt. Das Kontaktelement 26 und der Leiter 22 sind durch einen trichterartigen Isolator 28 bzw. einen hohlzylinderförmigen Isolator 30 gegenüber dem Schraubenkörper 4 elektrisch isoliert bzw. von diesem getrennt (auch mechanisch entkoppelt). Das Kontaktelement 26 und der Leiter 22 bilden eine erste elektrische Zu-/Ableitung zur Energie- und Signalübertragung zu/von der Sensoreinrichtung.

Der Verschluss 24 ist wenigstens teilweise elektrisch leitend und zwar so, das mit der Platine 20 oder einem oder mehreren darauf vorgesehenen Kontaktstellen (nicht bezeichnet) ein elektrischer Kontakt hergestellt werden kann. Ferner ist der Verschluss 24 so ausgeführt, dass im zusammengebauten Zustand ein elektrischer Kontakt mit einer zweiten elektrischen Zu-/Ableitung zur Energie- und Signalübertragung zu/von der Sensoreinrichtung besteht. Die zweite elektrische Zu-/Ableitung ist am Außenumfang des Schraubenkörpers 4 oder Bereichen desselben angeordnet, beispielsweise in Form einer leitenden Beschichtung und/oder Ummantelung (nicht gezeigt). Die zweite Zu-/Ableitung ist ferner am Schraubenkopf 6 z.B. als Beschichtung und/oder Ummantelung (nicht gezeigt) ausgebildet. Im Bereich des Schraubenkopfs 6 kann die zweite Zu-/Ableitung auch durch den Schraubenkopf 6 selbst gebildet werden, wenn dieser oder wenigstens Bereiche desselben elektrisch leitend sind. Über den am/im Schraubenkopf 6 bereitgestellten Teil der zweiten Zu-/Ableitung wird eine elektrische Verbindung mit dem Verschluss 24 bzw. dessen leitendem Bereich(en) und von dort zu der Sensoreinrichtung hergestellt.

Bei weiteren Varianten bildet die Außenseite des Befestigungselements (z.B. z.B. die Außenseite des Schraubenkörpers 4) die zweite elektrische Zu-/Ableitung. Hinsichtlich der ersten und zweiten elektrische Zu-/Ableitungen kann der Aufbau solcher Varianten als konzentrisch bezeichnet werden, mit einem Außenleiter und einem Innenleiter mit einem Isolator, der den Außenleiter und den Innenleiter von einander elektrische trennt.

An seinem darstellungsgemäß linke Ende ist am Schraubenkörper 4 ein Außengewinde 32 vorhanden, mit dem die Stulpschraube 2 in ein entsprechendes Innengewinde beispielsweise eines Schließzylinders eingeschraubt werden kann, um diesen in einer Schließvorrichtung (z.B. Einsteckschloss) zu befestigen.

Wenn der Schraubenkopf 6 in den Bereich eines Magnetfeldes gebracht wird, wird dies von dem Hallsensor 16 (auch als erste Sensoreinheit bezeichnet) detektiert. Wenn ein Magnetfeld durch eine am/im Türrahmen oder Schließblech vorgesehene Komponente (hier auch als detektierbares Element bezeichnet) bereitgestellt wird und die Zustandsdetektionsvorrichtung 2 und insbesondere der Schraubenkopf 6 durch Schließen der Tür in das Magnetfeld bewegt wird, wird dies mittels des Hallsensors 16 detektiert. Um zu vermeiden, dass der Hallsensor 16 anspricht, bevor die Tür vollständig geschlossen ist, kann das Magnetfeld so dimensioniert werden, dass der Hallsensor 16 anspricht, wenn er einen im geschlossenen Zustand der Tür vorliegenden Abstand zu dem das Magnetfeld bereitstellenden, detektierbaren Element hat oder unterschreitet.

Der Hallsensor 18 (auch als zweite Sensoreinheit bezeichnet) kann auch zur Detektion des geschlossenen Zustands der Tür verwendet werden. Bei der gezeigten Ausführungsform ist angenommen, dass der Hallsensor 18 nicht zur Detektion des geschlossenen Zustands der Tür verwendet wird, sondern um festzustellen, ob ein vom Hallsensor 16 detektierter geschlossener Zustand der Tür auch tatsächlich vorliegt. Der Hallsensor 18 ist "weiter innen" in der Stulpschraube 2 angeordnet und somit weiter als der Hallsensor 16 von der Seite des Stulpschraube 2 bzw. dem Schraubenkopf 6 beabstandet, die bzw. der im geschlossenen Zustand der Tür dem das Magnetfeld bereitstellenden detektierbaren Element gegenüberliegt und am nächsten kommt. Durch geeignete Dimensionierung des Magnetfelds und/oder einen ausreichenden Abstand des Hallsensors 18 von dem Hallsensor 16 kann erreicht werden, dass der Hallsensor 18 auch im geschlossenen Zustand der Tür nicht auf das Magnetfeld anspricht oder dies in einem von dem des Hallsensors 16 unterscheidbaren Maß. Hierfür kann der Hallsensor 18 beispielsweise in einem Abstand von dem Hallsensor 16 angeordnet sein, der gleich oder größer als der Abstand ist, den der Hallsensor 16 im geschlossenen Zustand der Tür von dem das Magnetfeld bereitstellenden detektierbaren Element hat. Detektiert der Hallsensor 16 das das Magnetfeld bereitstellenden detektierbaren Element bzw. dessen Magnetfeld und wird der Hallsensor 18 von dem Magnetfeld nicht oder nicht ausreichend betätigt, wird darauf geschlossen, dass die Tür tatsächlich geschlossen ist. Liegt ein Magnetfeld vor, auf das beide Hallsensoren 16 und 18 ansprechen, kann man davon ausgehen, dass das Magnetfeld nicht von dem detektierbaren Element bereitgestellt wird, sondern z.B. von einem zur Manipulation verwendeten Magneten oder durch ein elektrisches oder elektronisches Gerät, das ein Magnetfeld erzeugt, welches die Hallsensoren 16 und 18 (unbeabsichtigt) erfasst.

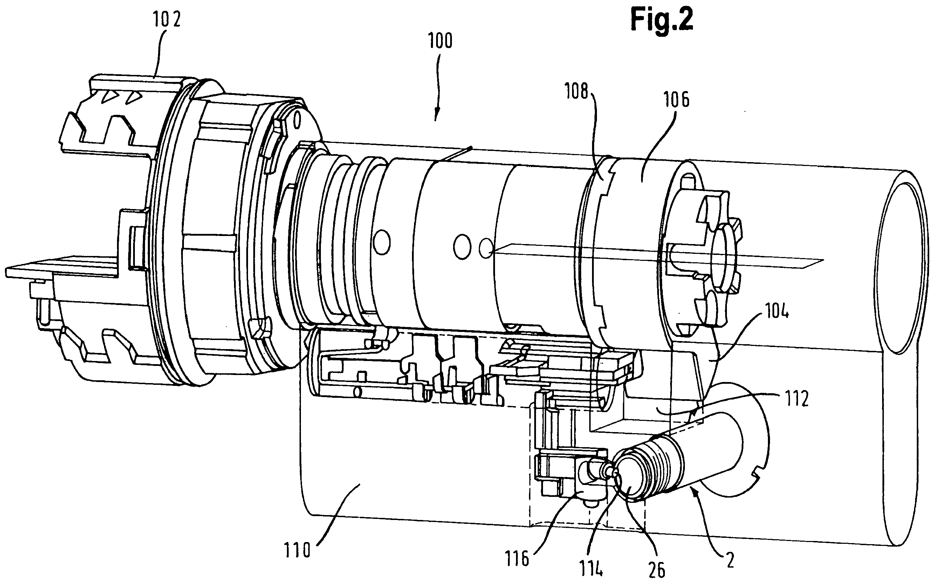

Fig. 2 zeigt eine Ausführungsform einer Schließvorrichtung 100 mit einem Schließzylinder (nicht bezeichnet) und einer Zustandsdetektionsvorrichtung 2 gemäß der Ausführung von Fig. 1. An seiner darstellungsgemäß linken Seite des Schließzylinders ist ein Knauf oder Drehknopf 102 ohne Gehäuse veranschaulicht. Drehungen des Knaufs 102 bewirken Drehungen eines Schließbarts 104, der an einem mit dem Knauf 102 drehbaren hier als ringförmig dargestellten Schließbartträger 106 angeordnet ist. Der Schließbart 104 ist über den Schließbartträger 106 mit einem Ring 108 verdrehfest gekoppelt. Die Verbindung des Rings 108 und des Schließbartträgers 106 kann durch formschlüssige Verbindung, wie gezeigt, oder Klebverbindung, kraftschlüssige Verbindung etc. erreicht werden. In einem Zylindergehäuse 110 ist eine Ausnehmung 112 vorhanden, in der sich der Schließbart 104 bewegen kann.

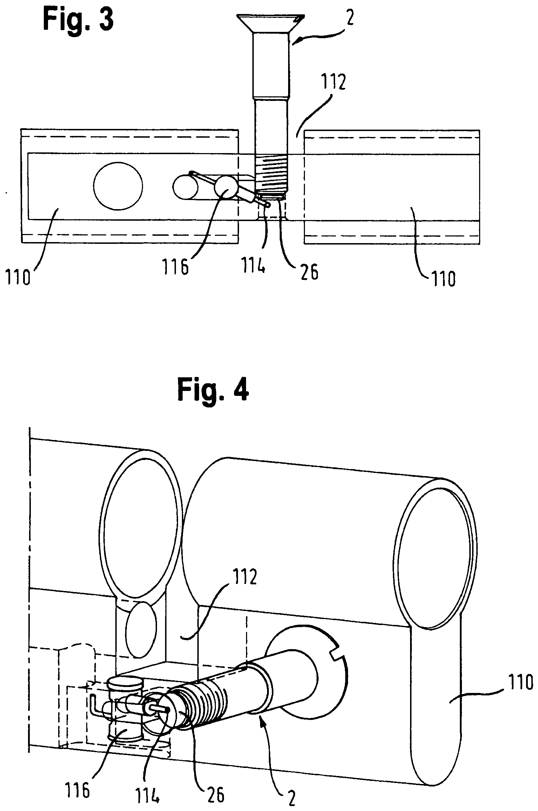

Wie oben beschrieben weist die Zustandsdetektionsvorrichtung einen sich aus dem Inneren heraus erstreckenden Leiter auf, und zwar bei der in Fig. 1 und 2 dargestellten Ausführungsform das Kontaktelement 26. Zur elektrisch leitenden Verbindung des Kontaktelements 26 ist, wie in Fig. 2 gezeigt, ein beweglicher Kontakt 114, der nun bezugnehmend auf Fig. 3 und 4 detaillierter beschrieben wird. Der Kontakt 114 ist an einem drehbaren hier als zylinderförmig dargestellter Kontaktträger 116 angeordnet. Der Kontaktträger 116 ist z.B. mittels einer (nicht gezeigten) Feder gemäß der Darstellung von Fig. 3 im Gegenuhrzeigersinn vorgespannt. Wenn die Zustandsdetektionsvorrichtung 2 in eine in dem Zylindergehäuse 110 ausgebildet Gewindebohrung (nicht bezeichnet) eingeschraubt wird, kontaktiert das Kontaktelement 26 den Kontakt 114 und bewegt diesen gemäß der Darstellung von Fig. 3 im Uhrzeigersinn gegen die auf den Kontaktträger 116 wirkende Vorspannung. Die Vorspannung ist vorzugsweise so bemessen, dass, sobald das Kontaktelement 26 (z.B. auch nur leicht) gegen den Kontakt 114 drückt, zwischen diesen ein zuverlässiger elektrischer Kontakt vorliegt und gewährleistet bleibt. Dadurch können Fertigungstoleranzen ausgeglichen werden bzw. können geringere Fertigungstoleranzen ausreichen. Auch kann dadurch im Wesentlichen unabhängig davon, wie weit die Zustandsdetektionsvorrichtung 2 eingeschraubt wird, der Kontakt zwischen dem Kontaktelement 26 und dem Kontakt 114 gewährleistet werden.

Zu dem an der Außenseite der Zustandsdetektionsvorrichtung 2 vorhandenen Leiter kann durch eine an der Innenseite der für die Zustandsdetektionsvorrichtung 2 vorgesehene Gewindebohrung (nicht bezeichnet) im Zylindergehäuse 110 angeordnete Kontaktfläche oder - bereiche eine elektrisch leitende Verbindung hergestellt werden.

Die hier beschriebene und gezeigte Ausführung, um elektrisch leitende Verbindungen mit der Zustandsdetektionsvorrichtung 2 herzustellen, veranschaulicht auch, dass die Zustandsdetektionsvorrichtung 2 wie ein entsprechendes herkömmliches Befestigungsmittel verwendet werden kann. Die Zustandsdetektionsvorrichtung 2 kann einfach in die Gewindebohrung im Zylindergehäuse 110 eingeschraubt werden, um den Schließzylinder zu sichern; besondere Maßnahmen, um die Zustandsdetektionsvorrichtung 2 elektrisch leitend zu verbinden, sind nicht erforderlich.

Gemäß einer nicht zur Erfindung gehörenden Ausführungsform kann die stulpschraubenartige Zustandsdetektionsvorrichtung 2 auch ohne Schließzylinder verwendet werden. Dabei kann die Schließvorrichtung z.B. an der Stelle, wo sich ansonsten das Gewinde des Schließzylinders für eine Stulpschraube befinden würde, ein entsprechendes Gewinde aufweisen. Auch die unter Bezugnahme auf Fig. 3 und 4 beschriebenen Kontaktierungskomponenten (z.B. Kontakt 114, Kontaktträger 116), können vorgesehen sein, die z.B. an einem in die Schließvorrichtung einsetzbaren Element angeordnet sein können, für dessen Anordnung der Bauraum für einen Schließzylinder genutzt wird. Ein solches Element kann (auch) ein Gewinde für das Gewinde 32 der Zustandsdetektionsvorrichtung 2 aufweisen bzw. kann die Bauform eines Schließzylindergehäuses haben.

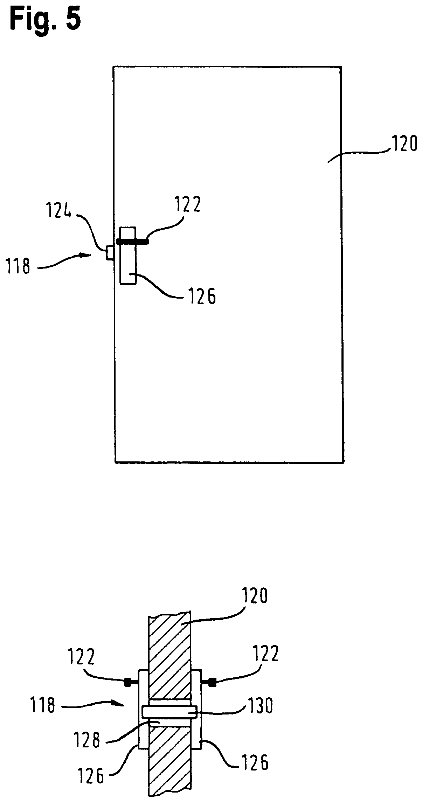

Ferner ist es vorgesehen, den für einen Schließzylinder vorgesehenen Bauraum für eine Einrichtung zu verwenden, die z.B. zur Befestigung eines oder zweier Türschilder dient. Eine solche nicht erfindungsgemäße Anordnung ist schematisch in Fig. 5 veranschaulicht, wo eine Schließvorrichtung 118 für eine Tür 120 gezeigt ist. Die Schließvorrichtung 118 umfasst zwei Türdrücker 122, eine durch diese betätigbare Falle 124 und zwei Türschilder 126. Ferner ist eine Aufnahme 128 vorhanden, in die ein Schließzylinder eingesetzt werden kann, hier aber eine Einrichtung 130 angeordnet ist, die (auch) die Türschilder 126 miteinander verbinden kann. Die Einrichtung 130 kann z.B. einen Hauptkörper haben, der mit dem in Fig. 3 und 4 gezeigten Körper 110 vergleichbar ist. In diesem sind Mittel vorhanden, die eine oder mehrere Verbindungen mit der Zustandsdetektionsvorrichtung 2 ermöglichen, um von dieser Information zu erhalten und dieser zuzuführen. Hierfür kann beispielsweise eine mit dem Kontaktelement 26 von Fig. 3 und 4 vergleichbare Anordnung verwendet werden, aber auch Kontaktflächen, Stecker, Büchsen etc. sind möglich.

Information der Zustandsdetektionsvorrichtung 2 wird von dieser an die jeweilige in der Schließzylinderaufnahme der Schließvorrichtung angeordnete Einrichtung (z.B. Schließzylinder oder Einrichtung gemäß Fig. 5) abgegeben. Die Schließvorrichtung kann die erhaltene Information selbst verarbeiten bzw. verwenden, um beispielsweise Drehungen des Schließbarts bzw. dadurch bewirkte Betätigungen eines Riegels zu verhindern und/oder zu bewirken. So kann z.B. verhindert werden, dass bei einer offenen Tür der Riegel ausgefahren wird, indem Drehungen des Schließbarts nicht zugelassen werden und/oder erreicht werden, dass ein bei einer offenen Tür ausgefahrener Riegel zurück bewegt wird, indem der Schließbart entsprechend gedreht wird.

Von der Zustandsdetektionsvorrichtung 2 erhaltene Information kann (unabhängig davon, ob sie von der Schließvorrichtung oder einer Einrichtung gemäß Fig. 5 selbst verarbeitet/verwendet wird oder nicht) an eine Steuerung, zentrale Einheit oder dergleichen eines Schließsystems oder Schließanlage, dem/der die Schließvorrichtung zugeordnet oder darin integriert ist, weitergeleitet und dort verarbeitet werden. Letzteres umfasst die Angabe (akustisch, visuell, etc.) darüber, ob die Tür geschlossen oder geöffnet ist, die Verwendung solcher Angaben im Zusammenhang mit Gebäudeüberwachungsfunktionen, Brandschutz und dergleichen, die Steuerung der Tür, um diese beispielsweise zu schließen (z.B. bei Bränden und/oder um unbefugten Zutritt zu verhindern) und/oder zu öffnen (z.B. um Fluchtwege zu öffnen und/oder Zutritt zu gewähren.

Information der Zustandsdetektionsvorrichtung (z.B. Tür offen/geschlossen) und sonstige Information über den Zustand der Schließvorrichtung kann in Kombination betrachtet werden. Dies erlaubt genauere Aussagen über den Zustand einer Tür, eines Tores und desgleichen. Derartige Informationsverarbeitung kann von der Verriegelungsvorrichtung selbst, von einer Steuerung einer Schließanlage oder von diesen jeweils teilweise erfolgen. Im letzteren Fall kann beispielsweise die Steuerung von der Verriegelungsvorrichtung vorverarbeitete Daten/Informationen erhalten.

## Patentansprüche

1. Schließvorrichtung (100) mit einer Zustandsdetektionsvorrichtung (2) für eine Tür, ein Tor und dergleichen, wobei die Schließvorrichtung (100) einen Schließzylinder für ein Schloss für die Tür, das Tor und dergleichen umfasst, wobei die Zustandsdetektionsvorrichtung (2) ausgeführt ist zur Anordnung in einer in der Schließvorrichtung (100) vorgesehenen Aufnahme eines Befestigungsmittels für den Schließzylinder und als Befestigungsmittel für den Schließzylinder zur Befestigung des Schließzylinders am Schloss ausgebildet ist, und wobei die Zustandsdetektionsvorrichtung (2) eine darin angeordnete Öffnungszustandsdetektionseinrichtung aufweist zur Detektion eines geschlossenen Zustands der Tür, des Tors und desgleichen.

2. Schließvorrichtung (100) nach Anspruch 1, wobei die Zustandsdetektionsvorrichtung (2) als Befestigungsmittel in Form einer Stulpschraube (2) ausgebildet ist.

3. Schließvorrichtung (100) nach Anspruch 1 und 2, wobei die Zustandsdetektionsvorrichtung eine Information abgebende und/oder eine Energie empfangende Einrichtung umfasst, wobei die Information und/oder Energie übertragende Einrichtung ausgeführt ist, um Information von der Öffnungszustandsdetektionseinrichtung zu der Schließvorrichtung zu übertragen bzw. Energie von der Schließvorrichtung zu erhalten.

4. Schließvorrichtung nach Anspruch 1, 2 oder 3, wobei die Öffnungszustandsdetektionseinrichtung der Zustandsdetektionsvorrichtung (2) eine erste Sensoreinrichtung zur Detektion des geschlossenen Zustands umfasst, und wobei die erste Sensoreinrichtung eine erste Sensoreinheit (16), die zur Detektion des geschlossenen Zustands der Tür, des Tors und desgleichen vorgesehen ist, und eine zweite Sensoreinheit (18) umfasst, die zur Detektion des geschlossenen Zustands der Tür, des Tors und desgleichen ausgelegt und so angeordnet ist, dass sie den geschlossenen Zustand der Tür, des Tors und desgleichen nicht zu detektieren vermag.

5. Schließvorrichtung nach einem der vorherigen Ansprüche, mit wenigstens einem detektierbaren Element zur Anordnung an einer die Tür, das Tor und dergleichen begrenzenden Struktur, wie z.B. eine Tür- oder Fensterzarge, ein Schließblech und dergleichen.

## Claims

1. A locking device (100) including a state detection device (2) for a door, a gate and the like, the locking device (100) comprising a lock cylinder for a lock for the door, the gate and the like, wherein the state detection device (2) is adapted for arrangement in a receptacle of a fastener for the lock cylinder provided in the locking device (100) and is designed as a fastener for the lock cylinder for fastening the lock cylinder to the lock, and
- wherein the state detection device (2) comprises an open-state detection device arranged therein for detecting a closed state of the door, the gate and the like.

2. The locking device (100) according to claim 1, wherein the state detection device (2), as a fastener, is designed in the form of a forend screw (2).

3. The locking device (100) according to claims 1 and 2, wherein the state detection device comprises a device outputting information and/or a device receiving energy, wherein the device transmitting information and/or energy is adapted to transmit information from the open-state detection device to the locking device and receive energy from the locking device, respectively.

4. The locking device according to claim 1, 2 or 3, wherein the open-state detection device of the state detection device (2) comprises a first sensor device for detecting the closed state, and wherein the first sensor device comprises a first sensor unit (16) provided for detecting the closed state of the door, the gate and the like, and a second sensor unit (18) adapted for detecting the closed state of the door, the gate and the like and arranged such that it is not able to detect the closed state of the door, the gate and the like.

5. The locking device according to any one of the preceding claims, including at least one detectable element for arrangement at a structure defining the door, the gate and the like, such as e.g. a door or window frame, a locking plate and the like.

## Revendications

1. Dispositif de fermeture (100) avec un dispositif de détection d'état (2) pour une porte, un portail et similaire, dans lequel le dispositif de fermeture (100) comprend un cylindre de fermeture pour une serrure pour la porte, le portail et similaire, dans lequel le dispositif de détection d'état (2) est réalisé pour être disposé dans un logement, prévu dans le dispositif de fermeture (100), d'un moyen de fixation pour le cylindre de fermeture et est réalisé en tant que moyen de fixation pour le cylindre de fermeture aux fins de la fixation du cylindre de fermeture à la serrure, et dans lequel le dispositif de détection d'état (2) présente un système de détection d'état d'ouverture disposé dans celui-ci servant à la détection d'un état fermé de la porte, du portail et similaire.

2. Dispositif de fermeture (100) selon la revendication 1, dans lequel le dispositif de détection d'état (2) est réalisé en tant que moyen de fixation sous la forme d'une vis à manchette (2).

3. Dispositif de fermeture (100) selon les revendications 1 et 2, dans lequel le dispositif de détection d'état comprend un système fournissant une information et/ou recevant de l'énergie, dans lequel le système transmettant une information et/ou de l'énergie est réalisé pour transmettre une information du système de détection d'état d'ouverture au dispositif de fermeture ou recevoir de l'énergie du dispositif de fermeture.

4. Dispositif de fermeture selon la revendication 1, 2 ou 3, dans lequel le système de détection d'état d'ouverture du dispositif de détection d'état (2) comprend un premier système de capteur servant à la détection de l'état fermé, et dans lequel le premier système de capteur comprend une première unité de capteur (16), qui est prévue pour la détection de l'état fermé de la porte, du portail et similaire, et une deuxième unité de capteur (18), qui est configurée pour la détection de l'état fermé de la porte, du portail et similaire et est disposée de telle sorte qu'elle n'est pas en mesure de détecter l'état fermé de la porte, du portail et similaire.

5. Dispositif de fermeture selon l'une quelconque des revendications précédentes, avec au moins un élément pouvant être détecté destiné à être disposé au niveau d'une structure délimitant la porte, le portail et similaire, par exemple un panneau de porte ou de fenêtre, une tôle de fermeture et similaire.
